# EUROPEAN PATENT APPLICATION

(11) **EP 3 940 558 A1**
(43) Date of publication of application: **19.01.2022**
(21) Application number: 21163859.8
(22) Date of filing: 22.03.2021
(51) Int. Cl.: G06F 16/958, G06N 3/08

(54) **METHOD AND APPARATUS FOR CONFIGURING MODELING PARAMETERS, ELECTRONIC DEVICE, COMPUTER STORAGE MEDIUM AND COMPUTER PROGRAM PRODUCT**

(30) Priority: 15.07.2020 CN 202010681506
(71) Applicant: Beijing Baidu Netcom Science and Technology Co., Ltd., Beijing 100085 (CN)
(72) Inventor: LU, De, Beijing, Beijing 100085 (CN); XU, Mingzhi, Beijing, Beijing 100085 (CN)
(74) Representative: dompatent von Kreisler Selting Werner - Partnerschaft von Patent- und Rechtsanwälten mbB

(57) **Abstract**

The present disclosure discloses a method and apparatus for configuring modeling parameters, a device, a computer storage medium and a computer program product, and relates to the field of artificial intelligence and deep learning technologies. The method includes: receiving a modeling request from a user; acquiring selectable task types corresponding to the modeling request and network configuration files corresponding respectively to the selectable task types, so as to generate a network configuration page, returning the network configuration page to the user, and acquiring values of network parameter configuration items input by the user; determining a data configuration file associated with the values of the network parameter configuration items according to a preset parameter association file, so as to generate a data parameter configuration page, returning the data parameter configuration page to the user, and acquiring values of data parameter configuration items input by the user; determining a calculation power configuration file associated with the values of the network parameter configuration items according to the parameter association file, generating a calculation power parameter configuration page according to the calculation power configuration file and a current condition of a computing resource, returning the calculation power parameter configuration page to the user, and acquiring values of calculation power parameter configuration items input by the user; and conducting a modeling processing operation according to the acquired values of the configuration items.

## Description

### TECHNICAL FIELD

The present disclosure relates to the field of computer technology, and particularly to the field of artificial intelligence and deep learning technologies, and more particularly to a method and apparatus for configuring modeling parameters, an electronic device, a computer storage medium and a computer program product.

### BACKGROUND

In recent years, an artificial intelligence technology has set off a huge development wave. Various parameter configurations in the modeling development process are required when the artificial intelligence technology is applied in industries. However, currently, the parameter configuration related to the modeling development process still remains in a code configuration stage, with a high modeling entry threshold. Even if there are some instruction documents for users to use, the users are required to read and learn the instruction documents, understand meanings of various parameter values and association relationships among parameters, and then configure modeling parameters in the form of codes, such that obviously, a learning cost is high, and a modeling efficiency is low.

### SUMMARY

In view of this, the present disclosure provides a method and apparatus for configuring modeling parameters, an electronic device, a computer storage medium and a computer program product, so as to reduce a learning cost and improve a modeling efficiency.

In a first aspect, the present disclosure provides a method for configuring modeling parameters, including:
receiving a modeling request from a user;
acquiring selectable task types corresponding to the modeling request and network configuration files corresponding respectively to the selectable task types, generating a network configuration page according to the network configuration files, returning the network configuration page to the user, and acquiring values of network parameter configuration items input by the user on the network configuration page;
determining a data configuration file associated with the values of the network parameter configuration items according to a preset parameter association file, generating a data parameter configuration page according to the data configuration file, returning the data parameter configuration page to the user, and acquiring values of data parameter configuration items input by the user on the data parameter configuration page;
determining a calculation power configuration file associated with the values of the network parameter configuration items according to the parameter association file, generating a calculation power parameter configuration page according to the calculation power configuration file and a current condition of a computing resource, returning the calculation power parameter configuration page to the user, and acquiring values of calculation power parameter configuration items input by the user on the calculation power parameter configuration page; and
conducting a modeling processing operation according to the values of the network parameter configuration items, the values of the data parameter configuration items and the values of the calculation power parameter configuration items.

In a second aspect, the present disclosure provides an apparatus for configuring modeling parameters, including:
a configuration interaction unit configured to receive a modeling request from a user;
a network configuration unit configured to acquire selectable task types corresponding to the modeling request and network configuration files corresponding respectively to the selectable task types, and generate a network configuration page according to the network configuration files,
the configuration interaction unit is further configured to return the network configuration page to the user, and acquire values of network parameter configuration items input by the user on the network configuration page;
a data configuration unit configured to determine a data configuration file associated with the values of the network parameter configuration items according to a preset parameter association file, and generate a data parameter configuration page according to the data configuration file,
the configuration interaction unit is further configured to return the data parameter configuration page to the user, and acquire values of data parameter configuration items input by the user on the data parameter configuration page;
a calculation power configuration unit configured to determine a calculation power configuration file associated with the values of the network parameter configuration items according to the parameter association file, and generate a calculation power parameter configuration page according to the calculation power configuration file and a current condition of a computing resource,
the configuration interaction unit is further configured to return the calculation power parameter configuration page to the user, and acquire values of calculation power parameter configuration items input by the user on the calculation power parameter configuration page; and
a modeling processing unit configured to record the values of the network parameter configuration items, the values of the data parameter configuration items and the values of the calculation power parameter configuration items, and conduct a modeling processing operation according to the values of the network parameter configuration items, the values of the data parameter configuration items and the values of the calculation power parameter configuration items.

In a third aspect, the present disclosure provides an electronic device, including:
at least one processor; and
a memory connected with the at least one processor communicatively;
the memory stores instructions executable by the at least one processor to enable the at least one processor to perform the method as mentioned above.

In a fourth aspect, the present disclosure further provides a non-transitory computer readable storage medium including computer instructions, which, when executed by a computer, cause the computer to carry out the method as mentioned above.

In a fifth aspect, the present disclosure further provides a computer program product comprising instructions which, when the program is executed by a computer, cause the computer to carry out the method as mentioned above.

From the above technical solution of the present disclosure, under the constraint of a parameter association rule, the user is guided to gradually complete the configuration of the modeling parameters in the form of a page interaction, and is not required to learn an instruction document or write codes by himself to realize a parameter configuration, thereby reducing the learning cost greatly, and improving the modeling efficiency.

Other effects of the above-mentioned alternatives will be described below in conjunction with embodiments.

### BRIEF DESCRIPTION OF THE DRAWINGS

The drawings are used for better understanding the present solution and do not constitute a limitation of the present disclosure. In the drawings:
Fig. 1 is a schematic diagram of a system architecture on which a first embodiment of the present disclosure is based;
Fig. 2 is a flow chart of a method for configuring modeling parameters according to a second embodiment of the present disclosure;
Figs. 3a~3g are diagrams of examples of configuration items displayed on a configuration page according to an embodiment of the present disclosure;
Fig. 4 is a structural diagram of an apparatus according to a third embodiment of the present disclosure; and
Fig. 5 is a block diagram of an electronic device configured to implement the embodiments of the present disclosure.

### DETAILED DESCRIPTION OF EMBODIMENTS

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

The present disclosure has a core concept that an association rule among modeling parameters is hidden in an interaction, and the user is guided to complete a configuration of the modeling parameters gradually in the form of a page interaction. For ease of understanding, a system architecture on which the present disclosure is based is briefly described first.

### First Embodiment

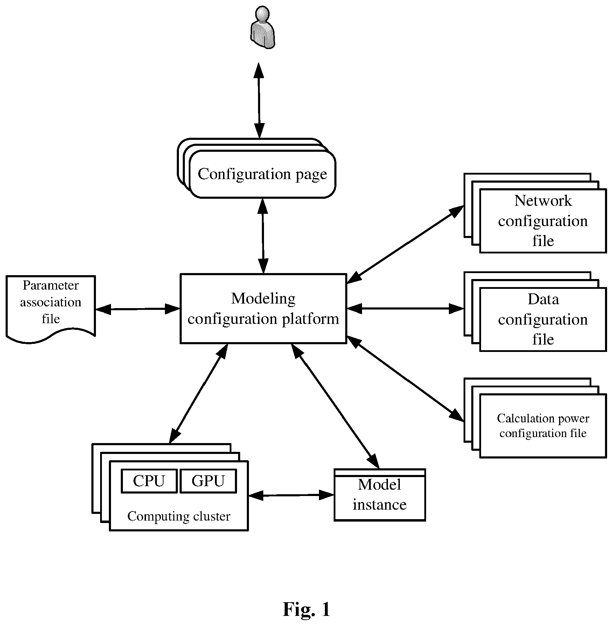

Fig. 1 is a schematic diagram of a system architecture on which a first embodiment of the present disclosure is based. The method according to the present disclosure is implemented by a modeling configuration platform; that is, an apparatus according to the present disclosure is provided at the modeling configuration platform. A configuration of modeling parameters is mainly divided into three parts: configuration of network parameters, configuration of data parameters and configuration of calculation power parameters. Related information of the network parameters required to be configured is recorded in a network configuration file, related information of the data parameters required to be configured is recorded in a data configuration file, and related information of the calculation power parameters required to be configured is recorded in a calculation power configuration file. These configuration files may be stored and maintained at a server, and upgraded and adjusted more conveniently due to independent storage.

The modeling configuration platform guides a user to configure the modeling parameters in an interaction form of returning a configuration page to the user and acquiring values of configuration items input by the user on the configuration page. An important basis is a parameter association file when the configuration page is returned to the user. The parameter association file contains association rules among the modeling parameters, that is, reflects association and constraints among the parameters. Instead of provision for the user in the form of an instruction document, this parameter association file is invoked by the modeling platform in the server back end in the form of a file to return the appropriate configuration page to the user according to the association or constraints between the parameters.

Specific model training, testing, or the like, performed in the modeling process are performed by computing resources. The computing resources usually exist in the form of clusters composed of computing nodes formed by CPUs and GPUs for example. For another example, a plurality of CPUs may form a CPU cluster, and a plurality of GPUs may form a GPU cluster, so as to perform resource allocation and corresponding calculations. In addition, there exist some storage resources for data storage, model data storage, or the like, which are not shown in Fig. 1.

In addition, after acquisition of the values of the configuration items input by the user on each configuration page, corresponding model instances may be constructed using the values of these configuration items, and a model is trained with the computing resources based on the model instances.

### Second Embodiment

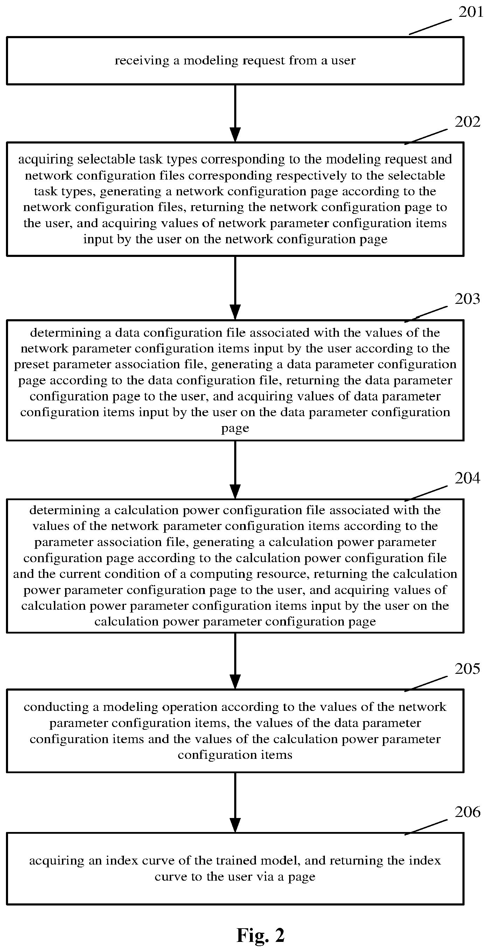

Fig. 2 is a flow chart of a method for configuring modeling parameters according to a second embodiment of the present disclosure, the method being executed by the modeling configuration platform shown in Fig. 1. With reference to Fig. 2, in an example, the method includes the following steps:
201: receiving a modeling request from a user.

When needing to perform a modeling operation, the user may initiate the modeling request by accessing an entry page specified by the modeling configuration platform or by triggering a specific link on the page, and each entry page or link may point to a modeling configuration page in a specific field; that is, the modeling request may include information of the field to which a model to be established belongs. The whole process of configuring modeling parameters is interactively implemented via a web.

The specific field may be a natural language processing (NLP) field, a voice recognition field, or the like. Tasks which may be used in different fields have different types, and in the following embodiments of the present disclosure, the NLP field is used as an example for description.

202: acquiring selectable task types corresponding to the modeling request and network configuration files corresponding respectively to the selectable task types, generating a network configuration page according to the network configuration files, returning the network configuration page to the user, and acquiring values of network parameter configuration items input by the user on the network configuration page.

As mentioned above, the modeling request may include information of the field, and the corresponding selectable task types may be determined according to the information of the field. For example, the selectable task types corresponding to the NLP field includes a classification task, a matching task, a sequence labeling task, a generation task, or the like.

The modeling configuration platform may read the network configuration files corresponding respectively to the selectable task types, and the network configuration files contains respectively network parameter configuration items corresponding to the selectable task types. Then, the modeling configuration platform may generate the network configuration page according to the network configuration files and return the network configuration page to the user.

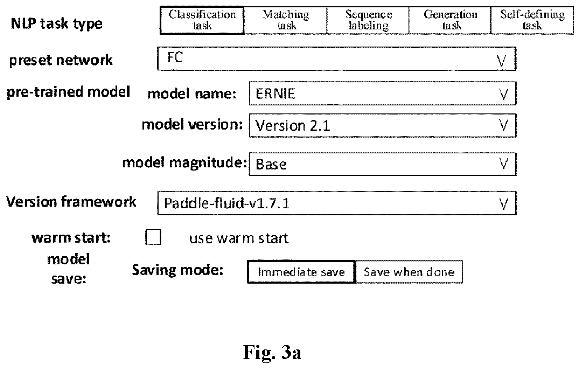

The network configuration page may include, but not limited to, the following network parameter configuration items:
1) A task type configuration item. On a network configuration page as shown in Fig. 3a, configuration items of NLP task types are provided and are consistent with the selectable task types corresponding to the NLP field. The user may select one from the classification task, the matching task, the sequence labeling task, the generation task and a self-defining task.
   In each configuration page returned to the user in the embodiment of the present disclosure, for part of the configuration items, selectable values may be provided for the user to select and input. For example, the task type configuration item provides the selectable values of the classification task, the matching task, the sequence marking task, the generation task and the self-defining task for the user to select. The selectable value may be presented in a tab form, such as the task type configuration item in Fig. 3a, or in the form of a drop-down box, such as a network type configuration item in Fig. 3a, or in the form of a check box, such as a warm-start configuration item in Fig. 3a, and the user selects whether to perform a model warm start by checking or unchecking the check box. The selectable values may provide selectable numerical values for the user to select under the association constraint of the parameters, which simplifies user operations.
   For another part of the configuration items, a text input box may also be provided for the user to input the values of the configuration items in a text form, which provides a more flexible way of setting configuration items having values which are not limited specially.
2) A network type configuration item. The user uses the network type configuration item to input a network type adopted for the modeling operation.

It should be particularly noted herein that, in each configuration page returned to the user, one or more enterable states and selectable values of some or all configuration items which have not been input by the user may be updated according to the parameter association file and one or more values of some or all configuration items which have been input by the user. The association relationship of the parameters in the parameter association file means both association between the parameters in different configuration pages and association between the parameters in the same configuration page.

For example, for the network type configuration item, after querying the parameter association file, it is found that network type parameters are associated with task type parameters, and network types corresponding to different task types have different selectable items. Therefore, the selectable value of the network type configuration item may be determined according to the value input in the task type configuration item by the user (i.e., the selected specific task type).

The enterable state means that the user may input the value of the configuration item. In a non-enterable state, the user is unable to input the value of the configuration item.

2) A model information configuration item. The model information configuration item refers to relevant information of the model to be built by the user, and may include information, such as a model name, a model version, a model magnitude, a model frame, warm start, a saving manner, or the like.

The model information configuration item may be associated with the value of the configuration item which has been input by the user previously, for example, the model name may be associated with the value of the network type configuration item entered by the user. Therefore, the enterable state and the selectable value of the model information configuration item are determined according to the value of the network type configuration item input by the user.

The model information configuration items may also be associated with each other, for example, a model version configuration item may be associated with a value of a model name configuration item input by the user. A model magnitude configuration item may be associated with the values of the model name configuration item and the model version configuration item input by the user. Other cases are not described herein one by one.

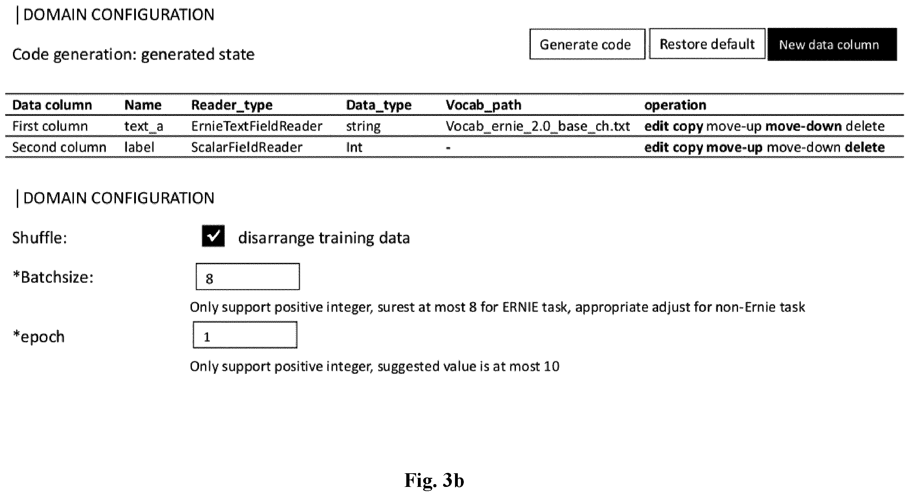

3) A reading parameter configuration item. This configuration item is mainly set for a Reader mechanism, and reflects a reading mechanism of the model, read data (what data is read), a reading manner, the type of conversion target data, or the like. Therefore, the reading parameter configuration items may include a domain configuration, an epoch (a process that all training samples perform a training operation once in the model is called one epoch) configuration, a batch (the training samples are divided into batches for training) configuration, or the like, as shown in Fig. 3b.

By querying the parameter association file, the domain configuration item is associated with the network type and a pre-trained model, such that the enterable state and the selectable value of the domain configuration item may be determined according to the values of a network type configuration item and a pre-trained model configuration item input by the user previously.

The epoch is filled with 1 by default, and the user may be allowed to enter a number in an input box.

The batch configuration item is associated with the pre-trained model, such that the enterable state and the selectable value of the batch configuration item may be determined according to the value of the pre-trained model configuration item input by the user previously.

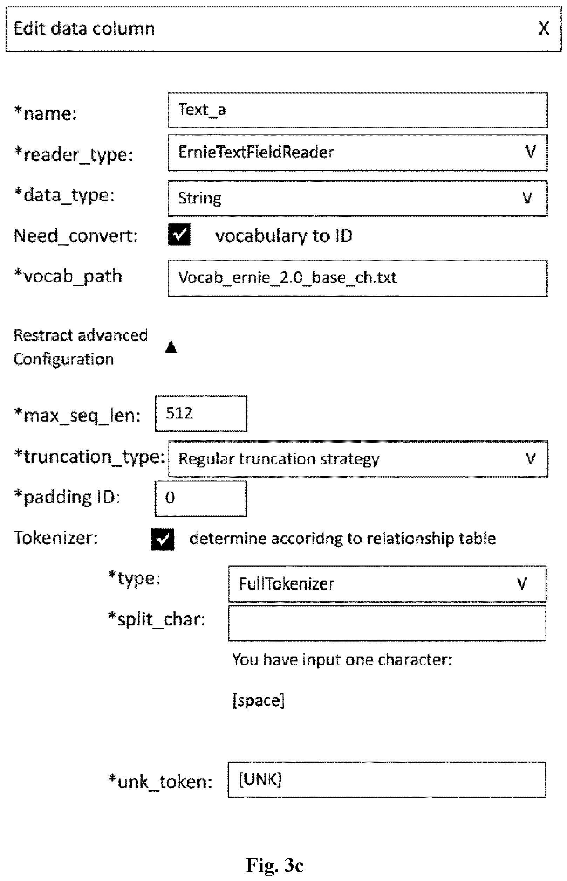

In addition, an editing button may be provided on the configuration page for the user to edit content of the specific configuration item. As shown in Fig. 3b, the user may click on the "editing" button and proceed to an interface as shown in Fig. 3c to edit a data column. Meanings and association relationships of the configuration items in Fig. 3c are not detailed herein.

In the embodiment of the present disclosure, due to adoption of an interactive mode based on a web page, when the text is input on the web page, the condition of input one or more spaces is often unable to be known when the one or more spaces are input necessarily. Therefore, in the present disclosure, an operation that one or more spaces are input by the user in the preset text input box may be acquired; and information for prompting the number of the spaces input by the user in the text input box is correspondingly displayed for the text input box.

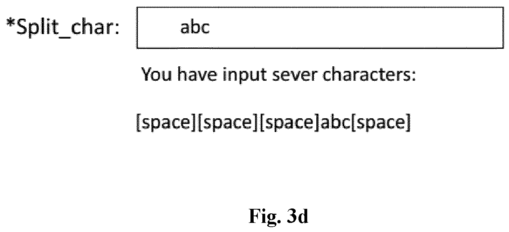

Taking a split char (character splitting) configuration item in Fig. 3c as an example, the user may need to type characters in the text input box of this configuration item, which has a problem of inputting spaces. With input of the user, the number and locations of the input spaces may be displayed below the text input box. As shown in Fig. 3d, assuming that after entering 3 spaces, the user enters "abc" and then another space, "[space] [space] [space]abc[space]" is displayed below the text input box.

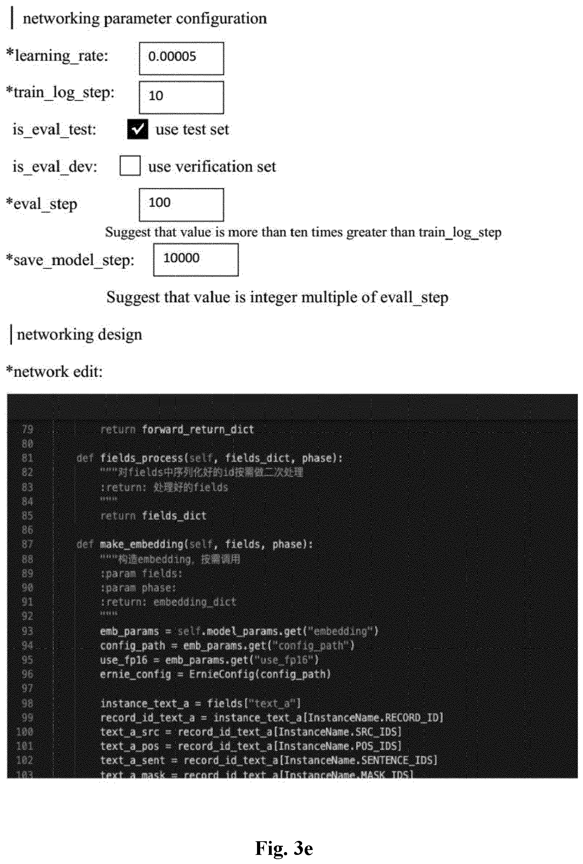

4) A hyper-parameter configuration item. The hyper-parameter configuration item is used for configuring hyper-parameters used by the user for training the model, and may include, for example, a learning rate (learning rate), a training log step (train_log_step), a return value step (eval step), or the like. As shown in Fig. 3e, all fields in the hyper-parameter configuration item are not explained herein one by one.

By querying the parameter association file, the learning rate configuration item is found to be associated with the pre-trained model, such that the enterable state and the selectable value of the learning rate configuration item may be determined according to the value of the pre-trained model configuration item input by the user previously.

Furthermore, in the embodiment of the present disclosure, a code may be generated according to the value of each parameter configuration item input by the user, and displayed on the configuration page returned to the user for the user to edit; and in response to receiving an operation of editing the code by the user, the acquired value of the corresponding parameter configuration item is updated according to edited content of the user.

As shown in Fig. 3e, a code which is generated automatically is presented in a network editing configuration item, and the user may view and edit the code, so as to know the configuration condition of each parameter and modify the parameter flexibly.

It should be noted that the content shown in Figs. 3a, 3b and 3e may be returned to the user in one network configuration page, or may be distributed into a plurality of network configuration pages which are returned to the user one by one.

The values of the configuration items input by the user on the network configuration page are sent to and recorded by the modeling configuration platform.

203: determining a data configuration file associated with the values of the network parameter configuration items input by the user according to the preset parameter association file, generating a data parameter configuration page according to the data configuration file, returning the data parameter configuration page to the user, and acquiring values of data parameter configuration items input by the user on the data parameter configuration page.

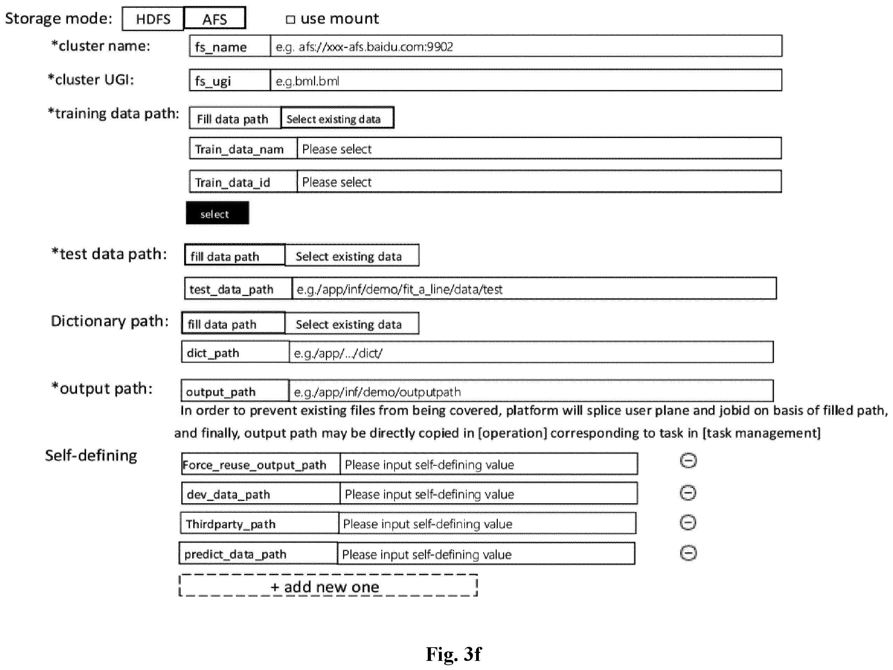

After a network parameter configuration is finished, a data parameter configuration is started. By querying the parameter association file, the data configuration file associated with the values of the network parameter configuration items input by the user may be determined, thus generating the data parameter configuration page. The data parameter configuration page may include, but not limited to, the following configuration items:
1) A cluster information configuration item. The cluster information configuration item is mainly used to configure the name, UGI, or the like, of a cluster for data storage, as shown in Fig. 3f.
   By querying the parameter association file, the cluster information configuration item is found to be associated with the network type, such that the enterable state and the selectable value of the cluster information configuration item may be determined according to the value of the network type configuration item input by the user previously.
2) An input data path configuration item. The input data path configuration item is mainly used for configuring information of model input data paths, such as a training data path, a test data path, a dictionary path, or the like.
   By querying the parameter association file, the training data path configuration item and the dictionary path configuration item are found to be associated with the network type, such that the enterable states and the selectable values of the training data path configuration item and the dictionary path configuration item may be determined according to the value of the network type configuration item input by the user previously.
3) An output data path configuration item. The output data path configuration item is mainly used for configuring information of model output data paths.

Fig. 3f only shows an exemplary data parameter configuration page, and all configuration items therein are not explained herein one by one.

The values of the configuration items input by the user on the data configuration page are sent to and recorded by the modeling configuration platform.

204: determining a calculation power configuration file associated with the values of the network parameter configuration items according to the parameter association file, generating a calculation power parameter configuration page according to the calculation power configuration file and the current condition of a computing resource, returning the calculation power parameter configuration page to the user, and acquiring values of calculation power parameter configuration items input by the user on the calculation power parameter configuration page.

After the data parameter configuration is finished, a calculation power parameter configuration is started. A calculation power parameter refers to a parameter for configuring the calculation power of the computing resource. The calculation power parameter configuration may be related to the data parameter configuration in addition to the network parameter configuration. If the calculation power parameter is determined to be related to the network parameter by querying the parameter association file, the calculation power configuration file associated with the value of the network parameter configuration item is determined. If the calculation power parameter is determined to be related to the network parameter and the data parameter by querying the parameter association file, the calculation power configuration file related to the values of the network parameter configuration item and the data parameter configuration item is determined.

The calculation power configuration file determines information, such as the configuration items contained in the calculation power configuration page, the selectable values of the configuration items, or the like, but in addition to this, generation of the calculation power configuration page is determined by the current condition of the computing resource. The generated calculation power parameter configuration page enables the user to configure the calculation power in the computing resource capable of supporting modeling requirements, thereby avoiding the problem that since the user performs a wrong calculation power configuration without knowing the calculation power of the computing resource, a model training operation fails.

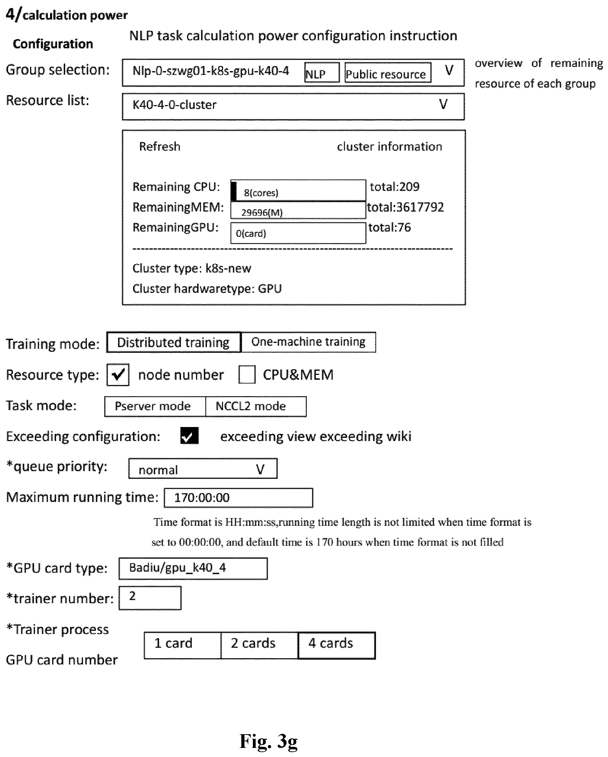

The calculation power parameter configuration page may include, but not limited to, the following configuration items:
1) A computing resource configuration item. The computing resource configuration item is mainly used to configure the computing resource used by training the model, and as shown in Fig. 3g, may include, for example, group selection, a resource list, a resource type, a training mode, or the like.
   According to information of the computing resource input by the user, using conditions of the corresponding computing resource may be displayed on the calculation power configuration page, such that the user may check and judge whether the configured calculation power parameter is reasonable. For example, in Fig. 3g, after the user selects a group and the resource list, remaining CPU, MEM (memory) and GPU conditions, or the like, of the corresponding computing resource are displayed.
   By querying the parameter association file, the group selection configuration item is associated with the model information, such that the enterable state and the selectable value of the group selection configuration item may be determined according to the value of the model information configuration item input by the user previously.
   The training mode configuration item is associated with the network type and the group selection, such that the enterable state and the selectable value of the training mode configuration item may be determined according to the values of the network type configuration item and the group selection configuration item input by the user previously.
2) A queue priority configuration item. The queue priority configuration item is used for configuring the priority of a training task in a queue.
3) A trainer number configuration item. The trainer number configuration item is mainly used to configure information of trainers used by training the model, such as "number of trainers", "number of trainer process GPU cards", or the like, in Fig. 3g.

Fig. 3g only shows an exemplary calculation power configuration page, and all configuration items therein are not explained herein one by one.

The values of the configuration items input by the user on the calculation power configuration page are sent to and recorded by the modeling configuration platform.

205: conducting a modeling operation according to the values of the network parameter configuration items, the values of the data parameter configuration items and the values of the calculation power parameter configuration items.

After the modeling configuration platform acquires the values of the network parameter configuration items, the values of the data parameter configuration items and the values of the calculation power parameter configuration items configured by the user, a scheduling platform (not shown in Fig. 1) schedules the computing resource, and the computing resource constructs model instances according to the values of the parameter configuration items and performs model training and verification, thereby completing the modeling operation. The processes of model training, verification, or the like, are not of interest in the present disclosure and are not described in detail herein.

206: acquiring an index curve of the trained model, and returning the index curve to the user via a page.

After the model is trained or verified, the modeling configuration platform may acquire the index curve of the model and return the index curve to the user via a page, such that the user may check whether indexes meet expected requirements. The configuration of the modeling parameters may also be adjusted based on the index curve if the expected requirements are not met. That is, the flow shown in some embodiments is executed again to adjust the values of the configuration items in the configuration page, thereby optimizing the model gradually and obtaining an expected model effect.

The method shown in some embodiments may have the following advantages.
1) The association rule among the modeling parameters is hidden in the interaction, and the user is guided to complete the configuration of the modeling parameters in the form of the page interaction under the constraint of the association rule. Compared with the prior art that the user needs to learn the instruction document and adopt codes to realize the parameter configuration, the method greatly reduces a learning cost and improves a modeling efficiency.
2) In embodiments of the present disclosure, the key configuration parameters in the modeling operation may be defined in the network configuration file, the data configuration file and the calculation power configuration file as much as possible, so as to be structurally reflected by the network configuration page, the data configuration page and the calculation power configuration page. The user has a larger parameter configuration space, and may correctly and flexibly configure the parameters under the parameter association constraint according to service requirements.

The method according to the present disclosure is described above in detail, and an apparatus according to the present disclosure will be described below in detail in conjunction with an embodiment.

### Third Embodiment

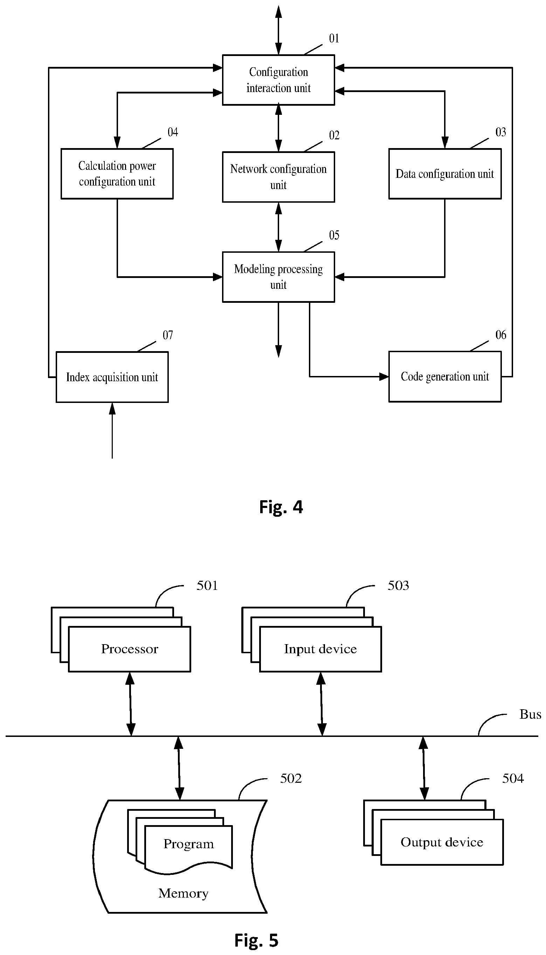

Fig. 4 is a schematic structural diagram of an apparatus according to a third embodiment of the present disclosure, the apparatus being provided in the modeling configuration platform shown in Fig. 1. As shown in Fig. 4, the apparatus may include a configuration interaction unit 01, a network configuration unit 02, a data configuration unit 03, a calculation power configuration unit 04 and a modeling processing unit 05, and may further include a code generation unit 06 and an index acquisition unit 07.

The configuration interaction unit 01 is configured to receive a modeling request from a user.

The network configuration unit 02 is configured to acquire selectable task types corresponding to the modeling request and network configuration files corresponding respectively to the selectable task types, and generate a network configuration page according to the network configuration files.

The modeling request may include information of a field, and the corresponding selectable task type may be determined according to the information of the field. For example, the selectable task types corresponding to the NLP field includes a classification task, a matching task, a sequence labeling task, a generation task, or the like. The network configuration unit 02 may read the network configuration file corresponding to each selectable task type, and the network configuration file contains network parameter configuration items corresponding to each selectable task type.

The network configuration page may include, but not limited to, a task type configuration item, a network type configuration item, a model information configuration item, a reading parameter configuration item and a hyper-parameter configuration item.

The configuration interaction unit 01 is further configured to return the network configuration page to the user, and acquire values of the network parameter configuration items input by the user on the network configuration page.

The data configuration unit 03 is configured to determine a data configuration file associated with the values of the network parameter configuration items according to a preset parameter association file, and generate a data parameter configuration page according to the data configuration file.

Specifically, the data configuration unit 03 may, by querying the parameter association file, determine the data configuration file associated with the values of the network parameter configuration items input by the user, thus generating the data parameter configuration page. The data parameter configuration page may include, but not limited to, cluster information configuration items, input data path configuration items and output data path configuration items.

The configuration interaction unit 01 is further configured to return the data parameter configuration page to the user, and acquire values of the data parameter configuration items input by the user on the data parameter configuration page.

The calculation power configuration unit 04 is configured to determine a calculation power configuration file associated with the values of the network parameter configuration items according to the parameter association file, and generate a calculation power parameter configuration page according to the calculation power configuration file and the current condition of a computing resource.

A calculation power parameter refers to a parameter for configuring the calculation power of the computing resource. The calculation power parameter configuration may be related to the data parameter configuration in addition to the network parameter configuration. If determining the calculation power parameter to be related to the network parameter by querying the parameter association file, the calculation power configuration unit 04 determines the calculation power configuration file associated with the value of the network parameter configuration item. If determining the calculation power parameter to be related to the network parameter and the data parameter by querying the parameter association file, the calculation power configuration unit 04 determines the calculation power configuration file related to the values of the network parameter configuration item and the data parameter configuration item.

The calculation power parameter configuration page may include, but not limited to, computing resource configuration items, queue priority configuration items and trainer number configuration items.

The configuration interaction unit 01 is further configured to return the calculation power parameter configuration page to the user, and acquire values of the calculation power parameter configuration items input by the user on the calculation power parameter configuration page.

The modeling processing unit 05 is configured to record the values of the network parameter configuration items, the values of the data parameter configuration items and the values of the calculation power parameter configuration items, and conduct a modeling processing operation according to the values of the network parameter configuration items, the values of the data parameter configuration items and the values of the calculation power parameter configuration items.

The network configuration unit 02, the data configuration unit 03 and the calculation power configuration unit 04 are further configured to, in the configuration page returned to the user, provide selectable values of a part of the configuration items for the user to select and input, and/or provide a text input box of a part of the configuration items for the user to input values of the configuration items in a text form.

Furthermore, the network configuration unit 02, the data configuration unit 03 and the calculation power configuration unit 04 are further configured to, in each configuration page returned to the user, update a enterable state and the a selectable value of some or all configuration items which have not been input by the user according to the parameter association file and values of some or all configuration items which have been input by the user.

The code generation unit 06 is configured to generate a code according to the value of each parameter configuration item input by the user; and display the code on a configuration page returned to the user by the configuration interaction unit 01, such that the code is editable by the user.

In response that the configuration interaction unit 01 receives an operation of editing the code by the user, the modeling processing unit 05 may update the acquired value of the corresponding parameter configuration item according to editing content of the user.

Furthermore, the configuration interaction unit 01 may further receive an operation that one or more spaces are input by the user in a preset text input box; and display, corresponding to the text input box, information for prompting the number of the spaces input by the user in the text input box.

Furthermore, the index acquisition unit 07 is configured to acquire an index curve of the trained model after the modeling processing operation. The configuration interaction unit 01 returns the index curve to the user via a page.

According to the embodiment of the present disclosure, there are also provided an electronic device, a readable storage medium and a computer program product.

Fig. 5 is a block diagram of an electronic device for a method for configuring modeling parameters according to the embodiment of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 5, the electronic device includes one or more processors 501, a memory 502, and interfaces configured to connect the components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output device, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 5, one processor 501 is taken as an example.

The memory 502 is configured as the non-transitory computer readable storage medium according to the present disclosure. The memory stores instructions executable by the at least one processor to cause the at least one processor to perform a method for configuring modeling parameters according to the present disclosure. The non-transitory computer readable storage medium according to the present disclosure stores computer instructions for causing a computer to perform the method for configuring modeling parameters according to the present disclosure.

The memory 502 which is a non-transitory computer readable storage medium may be configured to store non-transitory software programs, non-transitory computer executable programs and modules, such as program instructions/modules corresponding to the method for configuring modeling parameters according to the embodiment of the present disclosure. The processor 501 executes various functional applications and data processing of a server, that is, implements the method for configuring modeling parameters according to the above-mentioned embodiments, by running the non-transitory software programs, instructions, and modules stored in the memory 502.

The memory 502 may include a program storage area and a data storage area, and the program storage area may store an operating system and an application program required for at least one function; the data storage area may store data created according to use of the electronic device, or the like. Furthermore, the memory 502 may include a high-speed random access memory, or a non-transitory memory, such as at least one magnetic disk storage device, a flash memory device, or other non-transitory solid state storage devices. In some embodiments, optionally, the memory 502 may include memories remote from the processor 501, and such remote memories may be connected to the electronic device via a network. Examples of such a network include, but are not limited to, the Internet, intranets, local area networks, mobile communication networks, and combinations thereof.

The electronic device may further include an input device 503 and an output device 504. The processor 501, the memory 502, the input device 503 and the output device 504 may be connected by a bus or other means, and Fig. 5 takes the connection by a bus as an example.

The input device 503 may receive input numeric or character information and generate key signal input related to user settings and function control of the electronic device, such as a touch screen, a keypad, a mouse, a track pad, a touch pad, a pointing stick, one or more mouse buttons, a trackball, a joystick, or the like. The output device 504 may include a display device, an auxiliary lighting device (for example, an LED) and a tactile feedback device (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmitting data and instructions to, a storage system, at least one input device, and at least one output device.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display device (for example, a cathode ray tube (CRT) or liquid crystal display (LCD) monitor) for displaying information to a user; and a keyboard and a pointing device (for example, a mouse or a trackball) by which a user may provide input for the computer. Other kinds of devices may also be used to provide interaction with a user; for example, feedback provided for a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A method for configuring modeling parameters, comprising:
receiving (201) a modeling request from a user;
acquiring (202) selectable task types corresponding to the modeling request and network configuration files corresponding respectively to the selectable task types, generating a network configuration page according to the network configuration files, returning the network configuration page to the user, and acquiring values of network parameter configuration items input by the user on the network configuration page;
determining (203) a data configuration file associated with the values of the network parameter configuration items according to a preset parameter association file, generating a data parameter configuration page according to the data configuration file, returning the data parameter configuration page to the user, and acquiring values of data parameter configuration items input by the user on the data parameter configuration page;
determining (204) a calculation power configuration file associated with the values of the network parameter configuration items according to the parameter association file, generating a calculation power parameter configuration page according to the calculation power configuration file and a current condition of a computing resource, returning the calculation power parameter configuration page to the user, and acquiring values of calculation power parameter configuration items input by the user on the calculation power parameter configuration page; and
conducting (205) a modeling processing operation according to the values of the network parameter configuration items, the values of the data parameter configuration items and the values of the calculation power parameter configuration items.

2. The method according to claim 1, wherein the network configuration page comprises: a task type configuration item, a network type configuration item, a model information configuration item, a reading parameter configuration item and a hyper-parameter configuration item.

3. The method according to claim 1 or 2, wherein the data parameter configuration page comprises:
a cluster information configuration item, an input data path configuration item and an output data path configuration item.

4. The method according to any one of claims 1 to 3, wherein the calculation power parameter configuration page comprises:
a computing resource configuration item, a queue priority configuration item and a trainer number configuration item.

5. The method according to any one of claims 1 to 4, wherein in each configuration page returned to the user, selectable values of a part of the configuration items are provided for the user to select and input, and/or a text input box of a part of the configuration items are provided for the user to input values of the configuration items in a text form.

6. The method according to claim 5, further comprising:
in each configuration page returned to the user, updating a enterable state and a selectable value of some or all configuration items which have not been input by the user according to the parameter association file and values of some or all configuration items which have been input by the user.

7. The method according to any one of claims 1 to 6, further comprising:
generating a code according to the value of each parameter configuration item input by the user;
displaying the code on a configuration page returned to the user, such that the code is editable by the user; and
in response to receiving an operation of editing the code by the user, updating a value of the corresponding parameter configuration item according to editing content of the user.

8. The method according to claim 5, further comprising:
receiving an operation that one or more spaces are input by the user in a preset text input box; and
displaying, corresponding to the text input box, information for prompting the number of the spaces input by the user in the text input box.

9. The method according to any one of claims 1 to 8, further comprising:
after the modeling processing operation, acquiring (206) an index curve of a trained model, and returning the index curve to the user via a page.

10. An apparatus for configuring modeling parameters, comprising:
a configuration interaction unit (01) configured to receive a modeling request from a user;
a network configuration unit (02) configured to acquire selectable task types corresponding to the modeling request and network configuration files corresponding respectively to the selectable task types, and generate a network configuration page according to the network configuration files,
wherein the configuration interaction unit (02) is further configured to return the network configuration page to the user, and acquire values of network parameter configuration items input by the user on the network configuration page;
a data configuration unit (03) configured to determine a data configuration file associated with the values of the network parameter configuration items according to a preset parameter association file, and generate a data parameter configuration page according to the data configuration file,
wherein the configuration interaction unit (01) is further configured to return the data parameter configuration page to the user, and acquire values of data parameter configuration items input by the user on the data parameter configuration page;
a calculation power configuration unit (04) configured to determine a calculation power configuration file associated with the values of the network parameter configuration items according to the parameter association file, and generate a calculation power parameter configuration page according to the calculation power configuration file and a current condition of a computing resource,
wherein the configuration interaction unit (01) is further configured to return the calculation power parameter configuration page to the user, and acquire values of calculation power parameter configuration items input by the user on the calculation power parameter configuration page; and
a modeling processing unit (05) configured to record the values of the network parameter configuration items, the values of the data parameter configuration items and the values of the calculation power parameter configuration items, and conduct a modeling processing operation according to the values of the network parameter configuration items, the values of the data parameter configuration items and the values of the calculation power parameter configuration items.

11. The apparatus according to claim 10, wherein the network configuration page comprises: a task type configuration item, a network type configuration item, a model information configuration item, a reading parameter configuration item and a hyper-parameter configuration item.

12. The apparatus according to claim 10 or 11, wherein the data parameter configuration page comprises:
a cluster information configuration item, an input data path configuration item and an output data path configuration item.

13. The apparatus according to any one of claims 10-12, wherein the calculation power parameter configuration page comprises:
a computing resource configuration item, a queue priority configuration item and a trainer number configuration item.

14. The apparatus according to any one of claims 10 to 13, wherein the network configuration unit (02), the data configuration unit (03) and the calculation power configuration unit (04) are further configured to, in the configuration page returned to the user, provide selectable values of a part of the configuration items for the user to select and input, and/or provide a text input box of a part of the configuration items for the user to input values of the configuration items in a text form.

15. The apparatus according to claim 14, wherein the network configuration unit (02), the data configuration unit (03) and the calculation power configuration unit (04) are further configured to, in each configuration page returned to the user, update a enterable state and a selectable value of some or all configuration items which have not been input by the user according to the parameter association file and values of some or all configuration items which have been input by the user.

16. The apparatus according to any one of claims 10 to 15, further comprising:
a code generation unit (06) configured to generate a code according to the value of each parameter configuration item input by the user; and display the code on a configuration page returned to the user by the configuration interaction unit (01), such that the code is editable by the user; and
wherein the modeling processing unit (05) is further configured to, in response that the configuration interaction unit (01) receives an operation of editing the code by the user, update a value of the corresponding parameter configuration item according to editing content of the user.

17. The apparatus according to claim 14, wherein the configuration interaction unit (01) is further configured to receive an operation that one or more spaces are input by the user in a preset text input box; and display, corresponding to the text input box, information for prompting the number of the spaces input by the user in the text input box.

18. The apparatus according to any one of claims 10 to 17, further comprising:
an index acquisition unit (07) configured to acquire an index curve of the trained model after the modeling processing operation;
wherein the configuration interaction unit (01) is further configured to return the index curve to the user via a page.

19. An electronic device, comprising:
at least one processor(501); and
a memory (502) connected with the at least one processor (501) communicatively;
wherein the memory (502) stores instructions executable by the at least one processor (501) to enable the at least one processor (501) to perform the method according to any one of claims 1 to 9.

20. A non-transitory computer readable storage medium comprising computer instructions, which, when executed by a computer, cause the computer to carry out the method according to any one of claims 1 to 9.

21. A computer program product comprising instructions which, when the program is executed by a computer, cause the computer to carry out the method according to any one of claims 1 to 9.
